Europäisches Patentamt

European Patent Office

Office européen des brevets

(19)

(11) Veröffentlichungsnummer: **0 235 118**
A2

(12) **EUROPÄISCHE PATENTANMELDUNG**

(21) Anmeldenummer: 87890024.0

(22) Anmeldetag: 09.02.87

(51) Int. Cl.³: **G 01 N 27/72**

(30) Priorität: 17.02.86 AT 409/86

(43) Veröffentlichungstag der Anmeldung:
02.09.87 Patentblatt 87/36

(84) Benannte Vertragsstaaten:
AT CH DE FR GB LI

(71) Anmelder: EVG Entwicklungs- u. Verwertungs-
Gesellschaft m.b.H.
Vinzenz-Muchitsch-Strasse 36
A-8011 Graz(AT)

(72) Erfinder: Ritter, Josef, Dr.Dipl.-Ing
Stenggstrasse 33
A-8043 Graz(AT)

(72) Erfinder: Ritter, Gerhard,Dr. Dipl-Ing
Unterer Plattenweg 47
A-8043 Graz(AT)

(72) Erfinder: Ritter, Klaus Dipl.-Ing
Peterstalstrasse 157
A-8042 Graz(AT)

(72) Erfinder: Ingo Seidel Dipl.-Phys.
Albertstrasse 18
A-8010 Graz(AT)

(74) Vertreter: Schütz, Alfred, Dipl.-Ing. Dr. techn. Dipl.-Ing.
Dr. techn. Alfred Schütz Dipl.-Ing. Dr. techn. Rudolf
Pfeifer et al,
Dr. phil. Engelbert Mrazek Dipl.-Ing. Walter Holzer
Dipl.-Ing. Otto Pfeifer Fleischmanngasse 9
A-1040 Wien(AT)

(54) Verfahren zum Ermitteln von für die metallurgischen und/oder mechanischen Eigenschaften eines magnetisierbaren Prüflings massgeblichen Parametern auf zerstörungsfreiem, magnetinduktivem Wege, sowie Einrichtung zum Ausüben dieses Verfahrens.

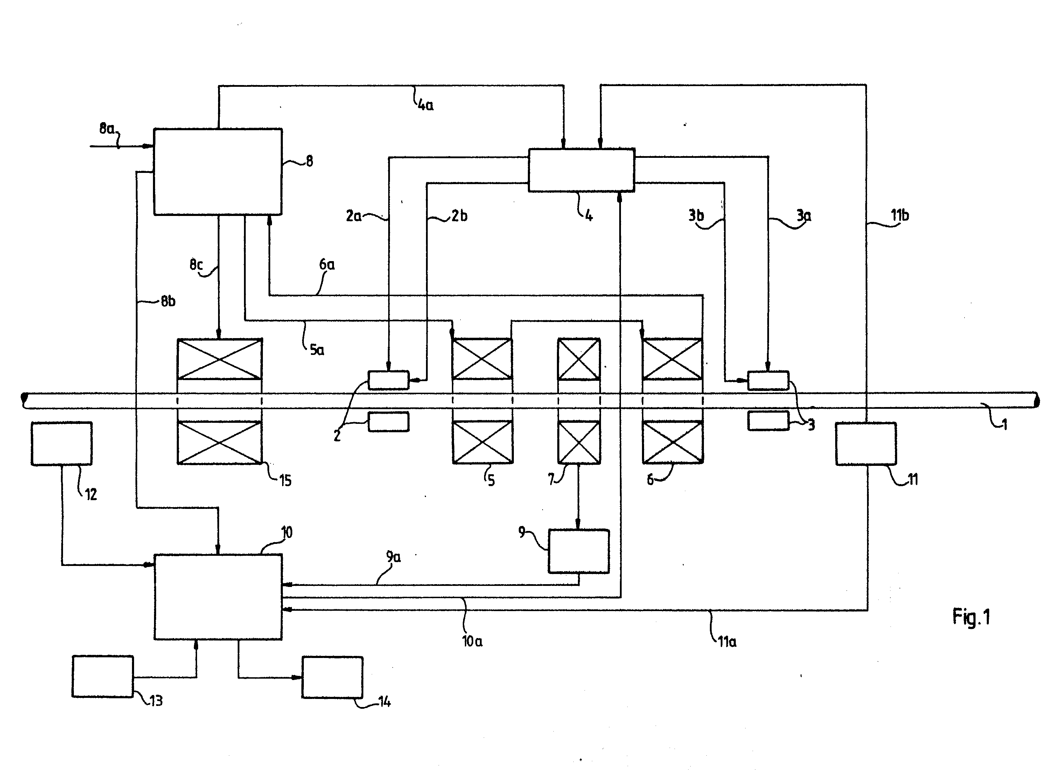

(57) Zum Ermitteln von für die metallurgischen und/oder mechanischen Eigenschaften eines magnetisierbaren Prüflings (1) maßgeblichen Parametern auf zerstörungsfreiem magnetinduktivem Wege wird der Prüfling einem homogenen axialen Gleichfeld (zwischen Spulen 5 und 6) und einer stetig und monoton veränderlichen Axialbelastung (zwischen Greifzangen 2 und 3) ausgesetzt; die hiebei auftretende Änderung des Magnetisierungszustandes des Prüflings wird zur Induktion einer elektrischen Spannung (in der Meßspule 7) ausgenützt, aus deren belastungsabhängigem Verlauf innerhalb eines beim ersten Nulldurchgang dieser Spannung endenden Meßbereiches zumindest ein charakteristischer Parameter für den Prüfling abgeleitet wird (Figur 1).

./...

Fig.1

Verfahren zum Ermitteln von für die metallurgischen und/oder mechanischen Eigenschaften eines magnetisierbaren Prüflings maßgeblichen Parametern auf zerstörungsfreiem, magnetinduktivem Wege, sowie Einrichtung zum Ausüben dieses Verfahrens

Die Erfindung betrifft ein Verfahren zum Ermitteln von für die metallurgischen und/oder mechanischen Eigenschaften eines magnetisierbaren Prüflings maßgeblichen Parametern auf zerstörungsfreiem, magnetinduktivem Wege, sowie eine Einrichtung zum Ausüben dieses Verfahrens.

Es ist bekannt, daß die metallurgischen und mechanischen Eigenschaften von magnetisierbaren, insbesondere ferromagnetischen Werkstoffen in engem Zusammenhang mit dem magnetischen Verhalten dieser Werkstoffe stehen und daß daher aus dem magnetischen Verhalten solcher Werkstoffe auf die metallurgischen und mechanischen Eigenschaften zurückgeschlossen werden kann. In Anwendung dieser Tatsache sind verschiedene Verfahren zur zerstörungsfreien Qualitätsprüfung von Werkstoffen entwickelt worden, von welchen die sogenannten magnetinduktiven Verfahren besondere Bedeutung erlangt haben. Über diese berichtet beispielsweise der Aufsatz "Zerstörungsfreie Qualitätsprüfung mit magnetinduktiven Verfahren" in der Zeitschrift "Maschinenmarkt", 84 (1978) 7, Vogel-Verlag Würzburg. Bei den einfachsten magnetinduktiven Verfahren wird der Prüfling als Transformatorkern verwendet und die von einer primärseitig angelegten Wechselspannung in einer Sekundärspule induzierte Spannung als parametrisches Maß für eine gesuchte Eigenschaft ausgewertet. Das industriell am häufigsten angewendete magnetinduktive Verfahren arbeitet gemäß dem zitierten Aufsatz mit zwei gleichen Prüftrafos, deren Primärwicklungen hintereinander und deren Sekundärwicklungen gegeneinander geschaltet sind, wobei der eine Prüftrafo als Kern den Prüfling und der andere Prüftrafo einen Vergleichsteil mit bekannten Eigenschaften aufnimmt und sekundärseitig eine aus Grund- und Oberwellen der Prüfwechselspannung resultierende Differenzspannung angezeigt wird. Nach den Angaben im zitierten Aufsatz hängen insbesondere folgende Eigenschaften ferromagnetischer Werkstoffe mehr oder weniger eindeutig und ausgeprägt mit deren magnetischen und elektrischen Eigenschaften zusammen: Kohlenstoffgehalt und Legierungszusammensetzung, Gefüge, Wärmebehandlungszustand, Härte, Festigkeit, Einsatzhärte und Einhärtungstiefe, Nitrierschichtdicke, Randentkohlung und Weichfleckigkeit, Oberflächenhärte, Ferritgehalt bei austenitischen Stählen. Dementsprechend kann man das magnetinduktive Verfahren zur zerstörungsfreien Prüfung all dieser Eigenschaften verwenden. Immer muß dabei aber zunächst durch eine Gegenprüfung der Zusammenhang zwischen den nach dem magnetinduktiven Verfahren erhaltenen Parameterwerten und den entsprechenden, auf herkömmliche Weise erhaltenen Parameterwerten ermittelt werden.

Während allen diesen Prüfverfahren ein belastungsfreier Prüfling und eine Wechselspannungsinduktion zugrunde liegen, erweitert die vorliegende Erfindung die Ausführungs- und Anwendungsmöglichkeiten magnetinduktiver Prüfverfahren erheblich, und zwar durch Einbeziehung von neu entdeckten Zusammenhängen zwischen den metallurgischen und mechanischen Eigenschaften mit dem magnetischen Verhalten magnetisierbarer Werkstoffe auf Grund der Erkenntnis, daß bei Änderung der mechanischen Belastung eines durch ein Gleichfeld magnetisierten Prüflings in diesem eine Änderung des Magnetisierungszustandes auftritt, die auf magnetinduktivem Wege in einer Meßspule eine veränderliche elektrische Spannung induziert, von welcher unter Einhaltung bestimmter Meßbedingungen Parameter abgeleitet werden können, welche auf reproduzierbare Weise metallurgische und/oder mechanische Eigenschaften des Prüflings erkennen lassen.

Ausgehend von dieser Erkenntnis besteht das erfindungsgemäße Verfahren darin, daß der Prüfling in einem axialen magnetischen Gleichfeld einer stetig und monoton veränderlichen mechanischen Axialbelastung ausgesetzt wird und daß die hiebei auftretende Änderung des Magnetisierungszustandes des Prüflings zur Induktion einer elektrischen Spannung ausgenützt wird, aus deren belastungsabhängigem Verlauf innerhalb eines beim ersten Nulldurchgang dieser Spannung endenden Meßbereiches zumindest ein charakteristischer Parameter für den Prüfling abgeleitet wird.

Besonders verläßliche Parameterwerte werden im Rahmen des erfindungsgemäßen Verfahrens erhalten, wenn der Prüfling im magnetischen Gleichfeld zwei aufeinanderfolgenden Be- und Entlastungszyklen unterworfen wird und der für den Prüfling charakteristische Parameter vom Spannungsverlauf im zweiten Belastungszyklus abgeleitet wird.

Die theoretischen Grundlagen für das erfindungsgemäße Verfahren sind noch nicht restlos geklärt, doch konnten, wie nachfolgend noch genauer erläutert wird, bereits zahlreiche überraschende und reproduzierbare Ergebnisse erhalten werden, welche die Anwendbarkeit dieses Verfahrens über die hier berichteten Fälle hinaus annehmen lassen.

Als Parameter können im Rahmen des erfindungsgemäßen Verfahrens insbesondere ausgewertet werden: Das Ergebnis einer Integration der bei Be- oder Entlastung des Prüflings induzierten elektrischen Spannung über den beim ersten Nulldurchgang endenden Meßbereich; das innerhalb dieses Meßbereiches liegende Maximum in dem bei Be- oder Entlastung des Prüflings induzierten Spannungsverlauf bzw. bei Auftreten mehrerer Maxima eines derselben; der Belastungswert bei dem innerhalb des Meßbereiches liegenden Maximum des induzierten Spannungsverlaufes bzw. bei Auftreten mehrerer Maxima eines derselben; der Belastungswert am Ende des Meßbereiches oder im Entlastungsfall gegebenenfalls der Belastungswert bei einem anderen, innerhalb des Meßbereiches liegenden Nulldurchgang der induzierten Spannung.

Die Auswertung der nach dem erfindungsgemäßen Verfahren erhaltenen Parameterwerte kann zur relativen oder auch zur absoluten Beurteilung bestimmter Eigenschaften des Prüflings herangezogen werden. Zur relativen Bewertung brauchen lediglich die für verschiedene Prüflinge erhaltenen Parameterwerte

- 3 -

miteinander verglichen zu werden. Zur absoluten Bewertung kann für verschiedene Werte eines ermittelbaren charakteristischen Parameters auf herkömmlichem Wege eine entsprechende Werte einer mechanischen Eigenschaft des Prüflings, wie Bruchspannung, Fließgrenze, Ersatzstreckgrenze, Formänderungsfestigkeit, Brucheinschnürung u.dgl. angebende Eichkurve angefertigt werden, so daß der einem erfindungsgemäß ermittelten Parameter entsprechende Wert an der Eichkurve ablesbar ist.

Die Erfindung betrifft auch eine Einrichtung zum Ausüben des neuen magnetinduktiven Prüfverfahrens, deren wesentliche Merkmale darin bestehen, daß zwischen einem Paar von Greifzangen ein ein homogenes axiales Magnetfeld erzeugendes Spulenpaar, vorzugsweise ein Helmholtz-Spulenpaar, und zwischen den beiden Spulen desselben eine Meßspule angeordnet sind und daß eine Steuervorrichtung vorgesehen ist, mittels welcher über eine steuerbare Kraftquelle die Greifzangen an einen Prüfling anlegbar sind und der Prüfling sodann axial be- und/oder entlastbar ist, wobei zugleich das magnetfelderzeugende Spulenpaar mit Gleichstrom beaufschlagbar ist, so daß in der Meßspule eine elektrische Spannung induziert wird, deren Verlauf von dem durch die Belastungsänderung beeinflußten Magnetisierungszustand des Prüflings abhängt.

Weitere Merkmale dieser Einrichtung gehen aus der nachfolgenden Beschreibung eines Ausführungsbeispieles hervor, an dem unter Bezugnahme auf die Zeichnungen auch das erfindungsgemäße Verfahren und die Auswertung seiner Ergebnisse erläutert werden sollen. In den Zeichnungen zeigen:

Figur 1 das Blockschema einer erfindungsgemäßen Einrichtung zur magnetinduktiven Materialuntersuchung, die

Figuren 2 und 3 typische Verläufe der in der Meßspule dieser Einrichtung bei Magnetisierung eines Prüflings aus warmgewalztem bzw. kaltverformtem Stahl und mechanischer Be- oder Entlastung desselben induzierten Spannung und die

- 4 -

Figuren 4 bis 10 verschiedene Eichkurven zur Auswertung der Meßergebnisse hinsichtlich verschiedener Materialeigenschaften.

Figur 1 zeigt schematisch den Aufbau einer erfindungsgemäßen Untersuchungseinrichtung für magnetisierbare Prüflinge, wobei die Darstellung zur deutlicheren Hervorhebung des Wesens der Erfindung auf Funktionsblöcke reduziert worden ist, deren praktische Ausführungsmöglichkeiten und Zusammenbau dem Fachmann aus den bestimmungsgemäßen Funktionen dieser Blöcke ohne weiteres erkennbar sind.

Der zu untersuchende Prüfling 1, z.B. ein Stahldraht, wird in Figur 1 von links nach rechts in die Einrichtung eingeschoben und durchsetzt dabei die offenen Mäuler zweier mit Abstand koaxial hintereinander angeordneter Greifzangen 2 und 3, die mittels nicht dargestellter hydraulischer Zylinder und eines hydraulischen Steuergerätes 4 über Hydraulikleitungen 2a und 3a kraftschlüssig an den Prüfling 1 anlegbar sind. Zwischen den beiden Greifzangen 2 und 3 befinden sich in koaxialer Anordnung die beiden Spulen 5, 6 eines Helmholtz-Spulenpaares und zwischen diesen beiden Spulen ist eine Meßspule 7 angeordnet, wobei alle diese Spulen vom Prüfling 1 axial durchsetzt werden. Unter einem Helmholtz-Spulenpaar ist eine Kombination zweier paralleler, gleich großer Spulen mit zahlreichen Windungen im Abstand ihres mittleren Radius zu verstehen, die in axialer Richtung einen praktisch homogenen Feldraum ergeben.

Unter der Steuerwirkung eines elektrischen Steuergerätes 8, welches zunächst über eine Steuerleitung 4a das hydraulische Steuergerät 4 zum Schließen der Greifzangen 2, 3 veranlaßt, kann das Helmholtz-Spulenpaar 5, 6 über Speiseleitungen 5a, 6a mit Gleichstrom beaufschlagt werden, so daß der Prüfling 1 einem homogenen axialen magnetischen Gleichfeld ausgesetzt wird.

Alsdann wird vom elektrischen Steuergerät 8 über die Steuerleitung 4a das hydraulische Steuergerät 6 veranlaßt, über die Hydraulikleitungen 2b und 3b nicht dargestellte hydraulische Zylinder zu beaufschlagen, welche über die bereits geschlossenen Greifzangen 2, 3 den Prüfling 1 unter eine stetig und monoton ansteigende Axialbelastung, im nachfolgend beschriebenen Ausführungsbeispiel unter eine Zugspannung setzen.

Durch die gleichzeitige Einwirkung eines homogenen magnetischen Gleichfeldes und einer monoton ansteigenden mechanischen Zugspannung auf den zwischen den Greifzangen 2 und 3 eingespannten Teil des Prüflings werden in diesem magnetische Zustandsänderungen bewirkt, welche in der Meßspule 7 eine veränderliche Spannung induzieren. Die induzierte Spannung·ist der Windungszahl der Meßspule proportional und abhängig von der Stärke des magnetischen Gleichfeldes des Helmholtz-Spulenpaares sowie von der auf die Querschnittsfläche bezogenen Laständerung in der Zeiteinheit. Diese Spannung wird über eine Verstärker- und Filterstufe 9 und eine Leitung 9a einem datenverarbeitenden elektronischen Auswertegerät 10 zugeführt.

Mittels eines Kraftmeßfühlers 11 wird die jeweils von den beiden Greifzangen 2, 3 auf den Prüfling ausgeübte Zugkraft gemessen und über eine Leitung 11a dem Auswertegerät 10 eingegeben. Der Kraftmeßfühler regelt über die Steuerleitung 11b den Kraftanstieg und kann bei Erreichen einer vorgegebenen Kraft das hydraulische Steuergerät 4 im Sinne einer Unterbrechung des weiteren Kraftanstieges beeinflussen. Der Kraftmeßfühler 11 kann unter dem Einfluß beider Greifzangen 2, 3 stehen, doch ist es auch möglich, die Greifzange 2 ortsfest abzustützen und nur die Greifzange 3 zur Zugbelastung des Prüflings 1 zu verschieben, wobei dann der Kraftmeßfühler 11 einseitig fest abgestützt und auf der anderen Seite der Krafteinwirkung der Greifzange 3 ausgesetzt sein kann.

Über eine Ausgangsleitung 10a kann das Auswertegerät 10 entweder über das Steuergerät 8 oder, wie in der Zeichnung angegeben, unmittelbar das hydraulische Steuergerät 4 veranlassen, bei Erreichen des ersten Nulldurchganges der in die Meßspule 7 induzierten Spannung die hydraulischen Zylinder der Greifzangen 2 und 3 über die Hydraulikleitungen 2b und 3b im Sinne einer monotonen Zugentlastung des Prüflings umzusteuern.

Die Einschaltung der gesamten Einrichtung erfolgt durch eine Einschalttaste 8a des elektrischen Steuergerätes 8, worauf dieses über eine Steuerleitung 8b das Auswertegerät 10 einschaltet.

Dem Auswertegerät können mittels eines die Querschnittsfläche des Prüflings 1 feststellenden Meßgerätes 12 und eines die Art der Auswertung der dem Gerät eingegebenen Daten festlegenden Eingabegerätes 13 weitere Daten zur Verarbeitung zugeführt werden, und schließlich kann an dieses Gerät eine Ausgabeeinrichtung üblicher Art, insbesondere ein anzeigendes oder registrierendes Gerät 14, angeschlossen sein.

Die Einrichtung wird durch eine über eine Steuerleitung 8c des elektrischen Steuergerätes 8 mit Wechselstrom beaufschlagte Entmagnetisierungsspule 15 vervollständigt, durch welche der Prüfling, der zu Beginn der Messung unmagnetisch sein muß, in die offenen Greifzangen 2, 3 eingeschoben werden muß.

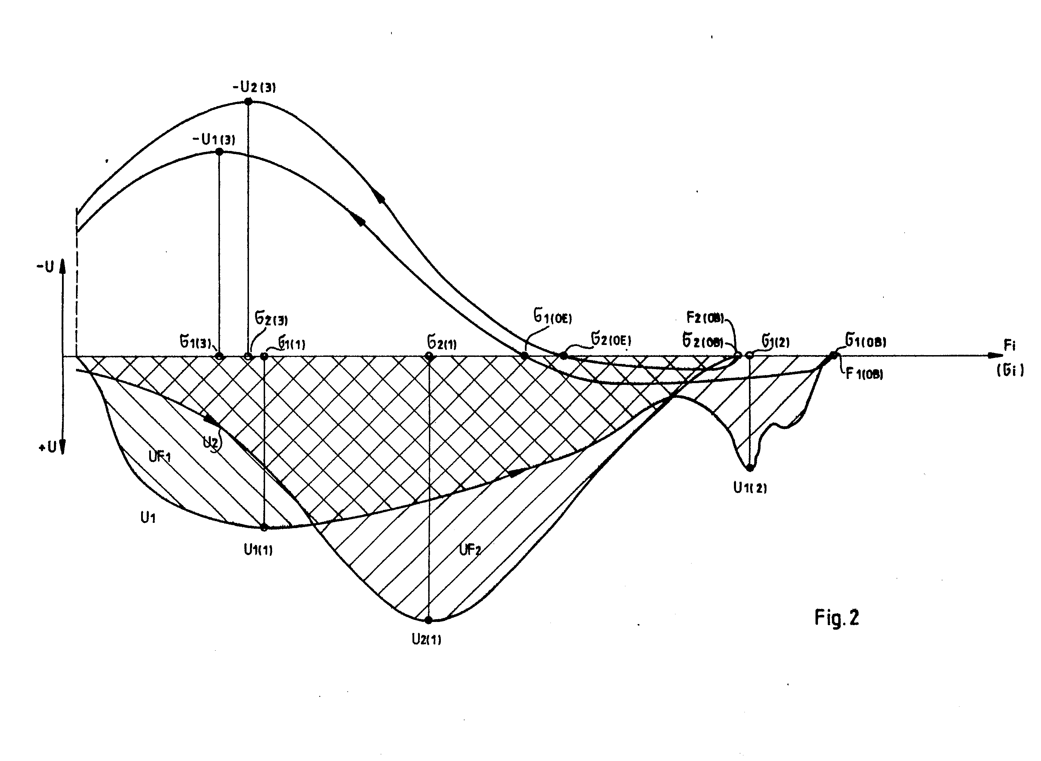

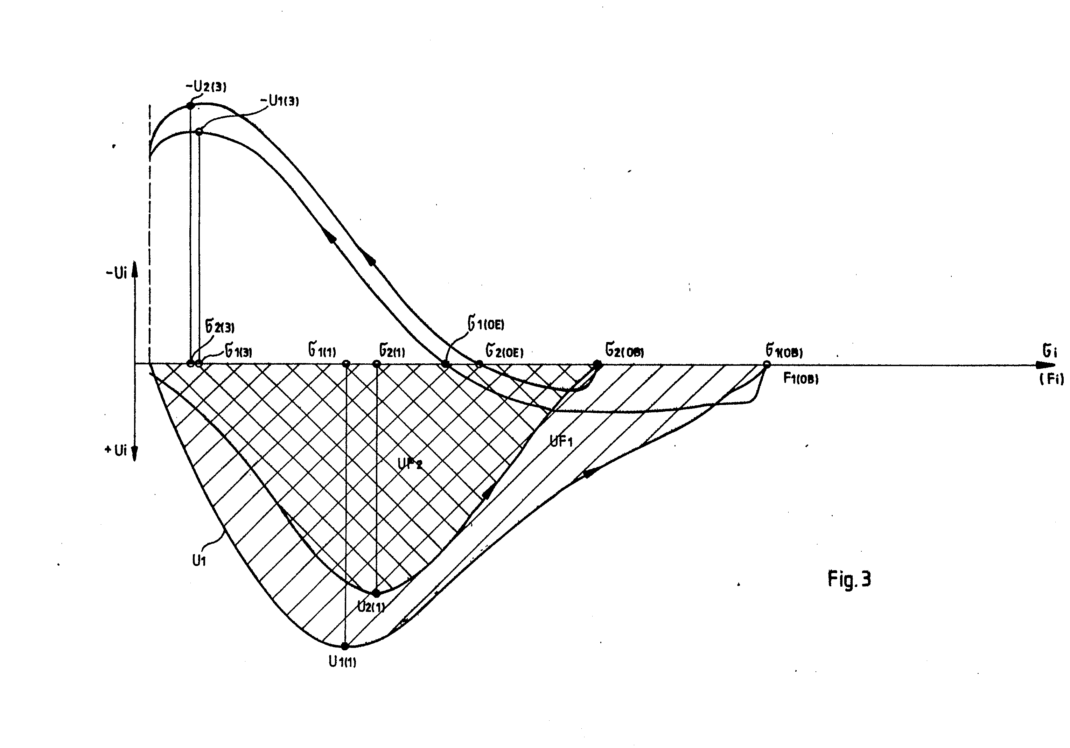

Nach Einführen des Prüflings 1 in die Greifzangen 2, 3, Schließen dieser Zangen und Aufbringen einer mechanischen Zugkraft auf den Prüfling mittels der Zangen unter gleichzeitiger Speisung der Spulen 5, 6 mit einem Gleichstrom vorgegebener Stärke wird in der Meßspule 7 durch die Änderung des Magnetisierungszustandes des Prüflings 1 eine Meßspannung $\pm U_i$ induziert, deren Verlauf in Abhängigkeit von der vom Kraftmeßfühler 11 gemeldeten Zugkraft $F_i$ bzw. der daraus unter Hinzunahme der Anzeige des Querschnittsmeßgerätes 12 ermittelbaren Zugspannung $\sigma_i$ in den Figuren 2 und 3 für zwei verschiedene Prüflinge bzw. Werkstoffe, nämlich einen warmgewalzten Stahl bzw. einen kaltverformten Stahl, sowie für je zwei zeitlich aufeinanderfolgende Belastungszyklen dargestellt ist.

Für warmgewalzten Stahl wird gemäß Figur 2 im ersten Belastungszyklus eine auf ein erstes Maximum $U_{1(1)}$ bei $\sigma_{1(1)}$

- 7 -

ansteigende, dann wieder absinkende und anschließend auf ein zweites Maximum $U_{1(2)}$ bei $\sigma_{1(2)}$ ansteigende und hernach bei $\sigma_{1(OB)}$ auf Null absinkende Spannung erhalten. Der Spannungsnulldurchgang $\sigma_{1(OB)}$ begrenzt den auszuwertenden Meßbereich, und bei der anschließenden mechanischen Entlastung des Prüflings ergibt sich zunächst ein zweiter Nulldurchgang bei $\sigma_{1(OE)}$ und hernach eine Polaritätsumkehr der Spannung und ein drittes Maximum $-U_{1(3)}$ bei $\sigma_{1(3)}$, worauf die Spannung auf nur schwer registrierbare Weise auf Null absinkt.

Im zweiten Belastungszyklus, vor dem der Prüfling nicht ausgespannt und daher auch nicht neuerlich entmagnetisiert wird, ergibt sich bei ansteigender Belastung nur ein allerdings relativ starkes Maximum $U_{2(1)}$ bei $\sigma_{2(1)}$ und sodann der Nulldurchgang bei $\sigma_{2(OB)}$, der deutlich niedriger liegt als $\sigma_{1(OB)}$, und bei Entlastung ein weiteres Maximum $-U_{2(3)}$ bei $\sigma_{2(3)}$.

Für kaltverformten Stahl ergeben sich bei Verwendung analoger Indizes für die Werte $U_{i(k)}$ und $\sigma_{i(k)}$ gemäß Figur 3 im ersten Belastungszyklus der Reihe nach die Parameter $U_{1(1)}$ bei $\sigma_{1(1)}$, $\sigma_{1(OB)}$, $\sigma_{1(OE)}$, $-U_{1(3)}$ bei $\sigma_{1(3)}$ und im zweiten Belastungszyklus $U_{2(1)}$ bei $\sigma_{2(1)}$, $\sigma_{2(OB)}$, $\sigma_{2(OE)}$ und $-U_{2(3)}$ bei $\sigma_{2(3)}$. Es ist erkennbar, daß bei kaltverformtem Stahl auch im ersten Belastungszyklus bei ansteigender Zugspannung nur ein Maximum $U_{1(1)}$ auftritt.

Alle vorstehend angeführten speziellen Parameterwerte im Spannungsverlauf und darüber hinaus auch noch das Integral der Werte $U_1$ oder $U_2$ innerhalb des bei $\sigma_{1(OB)}$ bzw. $\sigma_{2(OB)}$ endenden Meßbereiches können im Rahmen der Erfindung ausgewertet werden.

Es hat sich gezeigt, daß sich der Spannungsverlauf $U_2$ im zweiten Belastungszyklus gegenüber dem Spannungsverlauf $U_1$ im ersten Belastungszyklus, wie die Figuren 2 und 3 erkennen lassen, merklich ändert und daß einige Parameter aus dem Spannungsverlauf im ersten Belastungszyklus und andere Parameter aus dem Spannungsverlauf im zweiten Belastungszyklus besser reproduzierbar abgeleitet werden können.

Bevorzugt werden vom ersten Belastungszyklus das erste Maximum $U_{1(1)}$ bei $\sigma_{1(1)}$ und, falls vorhanden, das zweite Maximum $U_{1(2)}$ bei $\sigma_{1(2)}$, der Spannungsnulldurchgang bei $\sigma_{1(OB)}$ im Belastungsfall und bei $\sigma_{1(OE)}$ im Entlastungsfall sowie die Fläche $UF_1$, normiert auf die Kraft $F_{1(OB)}$ beim Nulldurchgang, also die Größe $UF_1/F_{1(OB)}$ ausgewertet.

Vom zweiten Belastungszyklus werden bevorzugt das erste Maximum $U_{2(1)}$ bei $\sigma_{2(1)}$, der Spannungsnulldurchgang bei $\sigma_{2(OB)}$ im Belastungsfall bzw. bei $\sigma_{2(OE)}$ im Entlastungsfall sowie die Fläche $UF_2$, wieder normiert auf die Kraft $F_{2(OB)}$ beim Nulldurchgang, ausgewertet.

Es hat sich gezeigt, daß durch Verknüpfung der Werte $U_i$ und $UF_i/F_{i(OB)}$ mit einem den Füllgrad der Meßspule charakterisierenden, vom Querschnitt des Prüflings abhängigen Korrekturfaktor, bei kreissymmetrischen Prüflingen vorzugsweise den Durchmesser $d$ des Prüflings in einer wählbaren Potenz $n$ enthaltenden Korrekturfaktor $d^n$ mit $1 \leqq n \leqq 2$, gut reproduzierbare Eichkurven erhalten werden können.

Unter Berücksichtigung der vorstehenden Angaben sind bisher die folgenden mechanischen Eigenschaften von Prüflingen aus Stahl untersucht worden:

| | |
|---|---|
| Bruchspannung $R_m$ | in N/mm², |
| Fließgrenze $R_e$ | in N/mm², |
| Ersatzstreckgrenze $R_{p0,2}$ | in N/mm², |
| Formänderungsfestigkeit $K_f$ | in N/mm², |

ferner als Hilfsgrößen für die Verformbarkeit

    a) die Brucheinschnürung $Z$ in % und

    b) die Größe $R_m/\log Z$,

und schließlich der

    Kaltverformungsgrad $K_v$ in % mit $K_v = S_1/S_0 \cdot 100$,

wobei $S_1$ die Fläche des kaltverformten Prüflings und $S_0$ die

Fläche des Ausgangsmaterials ist.

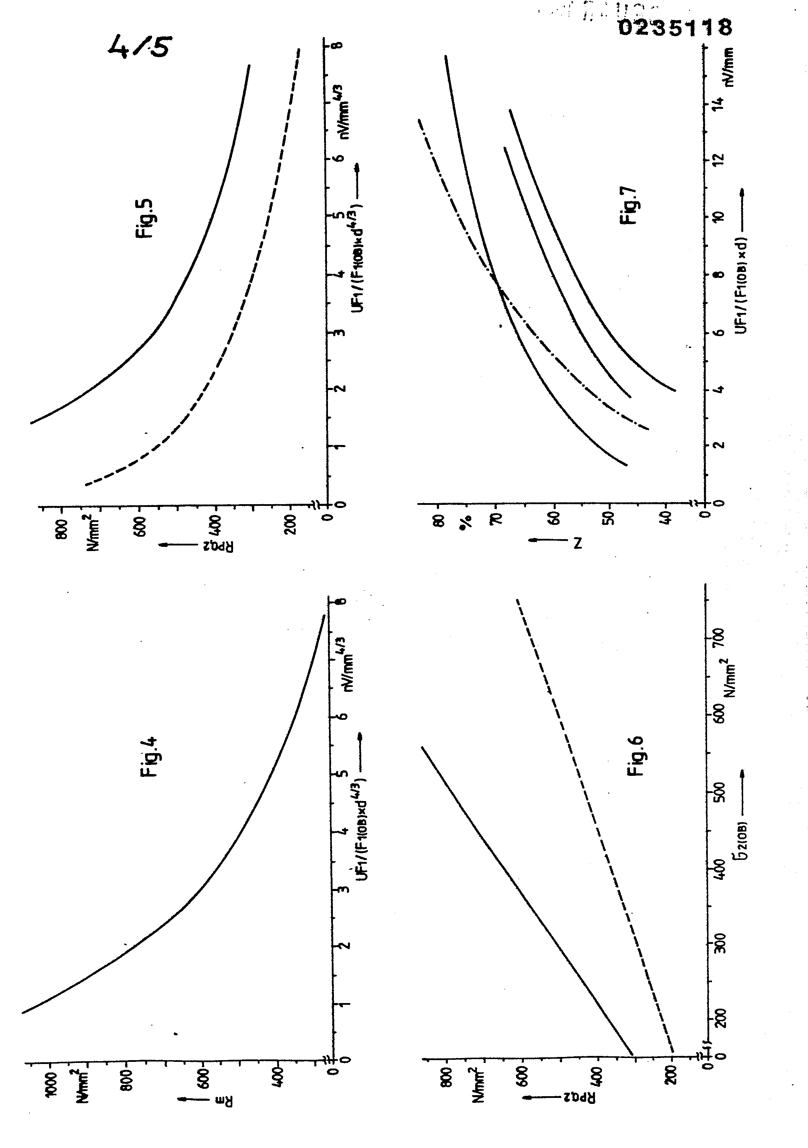

Die zur Auswertung der Meßergebnisse dienenden Eichkurven sind in den Figuren 4 bis 10 dargestellt.

Figur 4 zeigt die Abhängigkeit der Bruchspannung $R_m$ von der Größe $UF_1/(F_{1(OB)} \cdot d^{4/3})$; einen ähnlichen Kurvenverlauf mit geändertem Parameter erhält man für die folgenden Werte:

$$R_m = f(U_{1(1)}/d^n),$$
$$R_m/\log Z = f(U_{1(1)}/d^n),$$
$$R_m/\log Z = f(UF_1/(F_{1(OB)} \cdot d^n)),$$

wobei n in dem bereits definierten Bereich liegen kann.

Figur 5 zeigt die Abhängigkeit der Ersatzstreckgrenze $R_{p0,2}$ von der Größe $UF_1(F_{1(OB)} \cdot d^{4/3})$, wobei sich die gestrichelte Kurve auf warmgewalzten Stahl und die voll ausgezogene Kurve auf kaltverformten Stahl bezieht. Ähnliche Kurven erhält man für $R_{p0,2} = f(U_{1(1)}/d^n)$.

Figur 6 zeigt die Abhängigkeit der Ersatzstreckgrenze $R_{p0,2}$ von der mechanischen Spannung $\sigma_{2(OB)}$, wobei sich wieder die gestrichelte Kurve auf warmgewalzten Stahl und die voll ausgezogene auf kaltverformten Stahl bezieht. Ähnliche Gerade erhält man für die Abhängigkeit von $R_{p0,2}$ von $\sigma_{1(OB)}$, $\sigma_{1(OE)}$, $\sigma_{2(OE)}$, $\sigma_{1(1)}$ und $\sigma_{2(1)}$.

Figur 7 zeigt die Abhängigkeit der Brucheinschnürung Z in % von der Größe $UF_1/(F_{1(OB)} \cdot d)$; die unterschiedlichen Kurven ergeben sich durch verschiedene Werkstoffqualitäten der Prüflinge, d.h. es ist nur bei bekanntem Werkstoff, beispielsweise St 37, eine genaue Zuordnung möglich. Ähnliche Kurvenscharen gelten für $Z = f(U_{1(1)}/d^n)$.

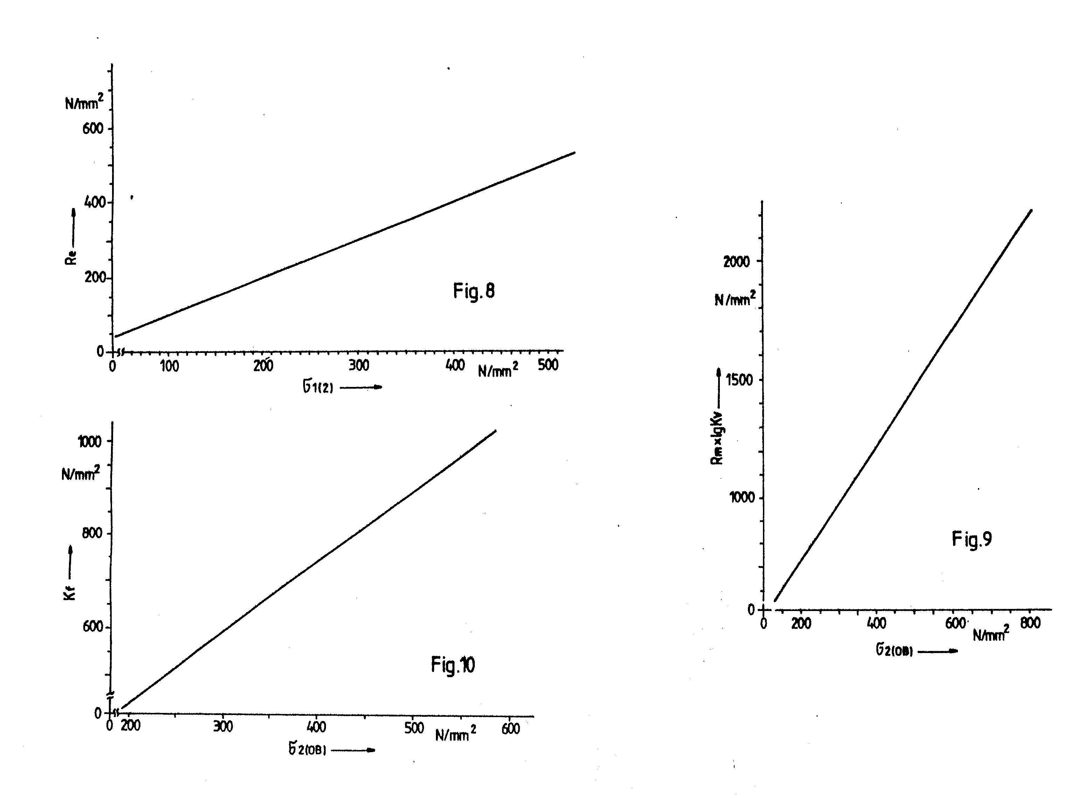

Figur 8 zeigt die Abhängigkeit der Fließgrenze $R_e$ von der mechanischen Spannung $\sigma_{2(1)}$. Ähnliche Geraden ergeben sich für $R_e = f(\sigma_{1(OB)})$, $R_e = f(\sigma_{1(OE)})$, $R_e = f(\sigma_{1(1)})$.

Figur 9 zeigt die Abhängigkeit der Größe $R_m \cdot \log K_v$ von der mechanischen Spannung $\sigma_{2(OB)}$. Wird die Bruchspannung $R_m$ z.B. aus der Eichkurve nach Figur 4 ermittelt, so läßt sich aus Figur 9 eine Aussage über den Kaltverformungsgrad $K_v$ machen.

Figur 10 zeigt schließlich die Abhängigkeit der Formänderungsfestigkeit $K_f$ von $\sigma_{2(OB)}$.

Lineare Abhängigkeiten mit positiver Steigung ergeben sich außerdem bei folgenden Funktionen:

$$R_m = f(\sigma_{1(1)}) \qquad K_f = f(\sigma_{1(1)}) \qquad R_m/\log Z = f(\sigma_{1(1)})$$
$$R_m = f(\sigma_{1(OE)}) \qquad K_f = f(\sigma_{1(OE)}) \qquad R_m/\log Z = f(\sigma_{1(OE)})$$
$$R_m = f(\sigma_{2(OE)}) \qquad K_f = f(\sigma_{2(OE)}) \qquad R_m/\log Z = f(\sigma_{2(OE)})$$
$$K_f = f(\sigma_{2(1)})$$
$$R_m = f(\sigma_{1(OB)}) \qquad K_f = f(\sigma_{1(OB)}) \qquad R_m/\log Z = f(\sigma_{1(OB)})$$

Die Diagramme nach den Figuren 2 und 3 können mittels Koordinatenschreiber aufgezeichnet und sodann ausgewertet werden. Der Abszissenwert der Eichkurven nach den Figuren 4 bis 10 wird jeweils vom datenverarbeitenden Auswertegerät der erfindungsgemäßen Prüfeinrichtung ermittelt und angezeigt, so daß der gesuchte Parameter oder Kennwert der mechanischen Eigenschaften unmittelbar an der zugehörigen Ordinate der betreffenden Eichkurve abgelesen werden kann. Vorteilhaft ist es, die entsprechenden Eichkurven unmittelbar in dem Auswertegerät zu speichern, so daß der gesuchte Kennwert der mechanischen Eigenschaften direkt ermittelt und angezeigt werden kann.

Patentansprüche:

1. Verfahren zum Ermitteln von für die metallurgischen und/oder mechanischen Eigenschaften eines magnetisierbaren Prüflings maßgeblichen Parametern auf zerstörungsfreiem, magnetinduktivem Wege, dadurch gekennzeichnet, daß der Prüfling in einem homogenen axialen magnetischen Gleichfeld einer stetig und monoton veränderlichen mechanischen Axialbelastung ausgesetzt wird und daß die hiebei auftretende Änderung des Magnetisierungszustandes des Prüflings zur Induktion einer elektrischen Spannung ausgenützt wird, aus deren belastungsabhängigem Verlauf innerhalb eines beim ersten Nulldurchgang dieser Spannung endenden Meßbereiches zumindest ein charakteristischer Parameter für den Prüfling abgeleitet wird.

2. Verfahren nach Anspruch 1, dadurch gekennzeichnet, daß der Prüfling im magnetischen Gleichfeld zwei aufeinanderfolgenden Be- und Entlastungszyklen unterworfen wird und daß der für den Prüfling charakteristische Parameter vom Spannungsverlauf im zweiten Belastungszyklus abgeleitet wird.

3. Verfahren nach Anspruch 1 oder 2, dadurch gekennzeichnet, daß die bei Be- oder Entlastung des Prüflings induzierte elektrische Spannung über den Meßbereich integriert und das Integrationsergebnis als Parameter ausgewertet wird.

4. Verfahren nach Anspruch 1 oder 2, dadurch gekennzeichnet, daß das bei Be- oder Entlastung des Prüflings im induzierten Spannungsverlauf innerhalb des Meßbereiches auftretende Maximum bzw. bei Auftreten mehrerer Maxima eines derselben als Parameter ausgewertet wird.

5. Verfahren nach Anspruch 1 oder 2, dadurch gekennzeichnet, daß der Belastungswert beim Maximum des induzierten Spannungsverlaufes innerhalb des Meßbereiches bzw. bei Auftreten mehrerer Maxima der Belastungswert bei einem dieser Maxima als Parameter ausgewertet wird.

6. Verfahren nach Anspruch 1 oder 2, dadurch gekennzeichnet, daß der Belastungswert am Ende des Meßbereiches oder im Entlastungsfall gegebenenfalls der Belastungswert bei einem anderen, innerhalb des Meßbereiches liegenden Nulldurchgang der induzierten Spannung als Parameter ausgewertet wird.

7. Verfahren nach einem der vorhergehenden Ansprüche, dadurch gekennzeichnet, daß für verschiedene Werte eines ermittelbaren charakteristischen Parameters auf herkömmlichem Wege eine entsprechende Werte einer mechanischen Eigenschaft des Prüflings, wie Bruchspannung, Fließgrenze, Ersatzstreckgrenze, Formänderungsfestigkeit, Brucheinschnürung u.dgl. angebende Eichkurve angefertigt wird, so daß der einem erfindungsgemäß ermittelten Parameter entsprechende Wert an der Eichkurve ablesbar ist.

8. Einrichtung zum Ausüben des Verfahrens nach einem der vorhergehenden Ansprüche, dadurch gekennzeichnet, daß zwischen einem Paar von Greifzangen (2, 3) ein ein homogenes axiales Magnetfeld erzeugendes Spulenpaar (5, 6), vorzugsweise ein Helmholtz-Spulenpaar, und zwischen den beiden Spulen desselben eine Meßspule (7) angeordnet sind und daß eine Steuervorrichtung (8) vorgesehen ist, mittels welcher über eine steuerbare Kraftquelle (4) die Greifzangen (2, 3) an einen Prüfling (1) anlegbar sind und der Prüfling sodann axial be- und/oder entlastbar ist, wobei zugleich das magnetfelderzeugende Spulenpaar (5, 6) mit Gleichstrom beaufschlagbar ist, so daß in der Meßspule (7) eine elektrische Spannung induziert wird, deren Verlauf von dem durch die Belastungsänderung beeinflußten Magnetisierungszustand des Prüflings (1) abhängt.

9. Einrichtung nach Anspruch 8, dadurch gekennzeichnet, daß die Meßspule (7), vorzugsweise über eine Vorverstärker- und Filterstufe (9), sowie ein die jeweilige Belastung des Prüflings (1) anzeigender Kraftmesser (11) an ein gemäß einem der Verfahren nach den Ansprüchen 2 bis 5 datenverarbeitendes Auswertegerät (10) angeschlossen sind.

- 13 -

10. Einrichtung nach den Ansprüchen 8 und 9, dadurch gekennzeichnet, daß die Steuervorrichtung (8) und der Kraftmesser (1) zur Steuerung der Greifzangen (2, 3) bei der Be- oder Entlastung des Prüflings (1) mit einem als Kraftquelle dienenden hydraulischen Steuergerät (4) verbunden sind.

11. Einrichtung nach einem der Ansprüche 8 bis 10, dadurch gekennzeichnet, daß im Einführungsweg des Prüflings (1) eine Entmagnetisierungsspule (15) angeordnet ist, deren Beaufschlagung vorzugsweise automatisch durch die Steuervorrichtung (8) auslösbar ist.

12. Einrichtung nach einem der Ansprüche 8 bis 11, dadurch gekennzeichnet, daß ein die Querschnittsfläche des Prüflings (1) erfassendes Meßgerät (12) vorgesehen und an das Auswertegerät (10) angeschlossen ist.

13. Einrichtung nach einem der Ansprüche 8 bis 12, dadurch gekennzeichnet, daß die funktionellen Zusammenhänge zwischen den gemessenen Parametern und den mechanischen Eigenschaften des Prüflings im Auswertegerät (10) gespeichert und die gesuchten Kennwerte der mechanischen Eigenschaften vom Auswertegerät anzeigbar sind.

Fig.1

Fig. 2

Fig. 3

Fig.4

Fig.5

Fig.6

Fig.7

Fig.8

Fig.9

Fig.10